# EUROPÄISCHE PATENTANMELDUNG

(11) **EP 1 596 008 A2**
(43) Veröffentlichungstag der Anmeldung: **16.11.2005**
(21) Anmeldenummer: 05004777.8
(22) Anmeldetag: 04.03.2005
(51) Int. Cl.: E02B 3/10, E02B 3/12

(54) **Hohlkörper in Form von Matten oder Schläuchen als Befestigungsmaterial für Deiche**

(30) Priorität: 19.03.2004 DE 202004004354 U
(71) Anmelder: Pastorino, Jürgen, 21244 Buchholz (DE); Jung, Oskar, 96247 Michelau (DE)
(72) Erfinder: Pastorino, Jürgen, 21244 Buchholz (DE); Jung, Oskar, 96247 Michelau (DE)
(74) Vertreter: Glaeser, Joachim

(57) **Zusammenfassung**

Die Erfindung bezieht sich auf mit Füllmaterialpartikeln befüllbare Hohlkörper in Form von Matten oder Schläuchen aus Textilien als Befestigungsmaterial für durch Hochwasser gefährdete Deiche und Dämme. Die Hohlkörper sind aus Abstandsgewirken aus Kunststofffäden gebildet. Die Abstandsgewirke sind an ihrer Warenunterseite mit einer wasserundurchlässigen Kunststoffschicht versehen und weisen an ihrer Warenoberseite Maschenweiten auf, die kleiner als die Partikelgröße des Füllmaterials sind, wobei die Warenober- und die Warenunterseite den Hohlkörper begrenzen.

## Beschreibung

Die Erfindung bezieht sich auf mit Füllmaterialpartikeln befüllbare Hohlkörper in Form von Matten oder Schläuchen aus Textilien als Befestigungsmaterial für durch Hochwasser gefährdete Deiche und Dämme.

Bislang wird versucht, durch Hochwasser gefährdete Deiche dadurch zu retten, dass an den kritischen Stellen Sandsäcke aufgelegt werden. Erfolg haben solche Maßnahmen aber nur dann, wenn es gelingt rechtzeitig genügend Sandsäcke anzubringen, um dadurch ein weiteres Aufweichen bzw. eine Zerstörung bereits aufgeweichter Deiche zu verhindern oder verzögern. Wenn jedoch Wasser über die Deichkrone tritt oder über eingebrochene Stellen an der Deichrückseite entlang strömen kann, können Sandsackauflagen die weitere rasche Zerstörung des Deiches nicht mehr verhindern.

Die üblicherweise beim Katastrophenschutz eingesetzten Sandsäcke sind relativ klein, damit sie von Hand transportiert und verlegt werden können, da der Einsatz irgendwelcher maschinellen Hilfsgeräte ortsbedingt meist nicht möglich ist. Andererseits können selbst großflächige Barrieren aus relativ großen Sandsäcken unterspült werden, so dass selbst deren Einsatz sich dann als nutzlos erweist.

Bei der vorliegenden Erfindung sollen Hohlkörper in Form von flachen Matten oder Schläuchen eingesetzt werden, die aus Abstandsgewirken hergestellt worden sind. Die durch die Warenober- und -unterseite gebildeten Hohlkörper können gemäß der Erfindung mit Sand, Kies, Granulat, Blähton, Hydrokulturgranulat, Blähschiefer gefüllt werden, wobei deren Korngröße die Maschenweite der Waren des Abstandsgewirks überschreitet.

Abstandsgewirke sind kettengewirkte, doppelflächige Konstruktionen, bei denen die beiden Warenflächen durch Verbindungsfäden auf Abstand gehalten werden. Als Fadenmaterial kommt Kunststoff in Form synthetischer Multifilamente oder Monofile in Frage, wobei das Fadenmaterial eine gewisse Eigensteifigkeit haben muss, damit das Abstandsgewirk seine Form hält.

Aus Abstandsgewirken hergestellte Kissen oder Schläuche haben den Vorteil, dass sie von Hause aus eine relativ hohe Formsteifigkeit haben, wenn sie im Inneren mit einem Füllmaterial, beispielsweise Kies oder Sand, gefüllt worden sind. Die Füllung soll hinsichtlich der Partikelgröße so ausgewählt werden, dass praktisch keine Teilchen durch die Maschen der beiden Warenstücke des Abstandsgewirks hindurchtreten können, wenngleich beispielsweise Wasser von außen eindringen, durch den Innenraum des Hohlkörpers hindurchströmen und aus dem Abstandsgewirk wieder austreten kann. Es ist gerade diese Eigenschaft, die das Abstandsgewirk für den Hochwasserschutz prädestiniert.

Bei der Erfindung ist beispielsweise daran gedacht, eine Matte, also ein großflächiges Gebilde mit einer relativ geringen Querabmessung so groß auszuführen, dass eine solche flache Matte, zusammengerollt von einer Person leicht transportiert werden kann. Sie kann auf eine gefährdete Deichfläche aufgelegt werden und mit Hilfe von Befestigungsmitteln in oberen Bereich des Deiches festgelegt oder festgepflockt werden. Auf diese Art und Weise kann verhindert werden, dass überschießendes Wasser Deichmaterial abtragen kann.

Bei einer besonders bevorzugten Ausführungsform wird das Abstandsgewirk einseitig mit einer wasserundurchlässigen Schicht, beispielsweise mit einer Polychloroprenschicht oder einem zweckmäßig angepassten Produkt versehen. Eine solche Schicht erhöht das Gewicht einer entsprechend hergestellten Matte kaum, hat aber den Vorteil, dass kein Wasser durch die Polychloroprenschicht hindurchdringen kann. Gerade bei der Hangverfestigung bei Dämmen und Deichen ist eine Sandwichanordnung: Abstandsgewirk - Schaumpolychloropren sinnvoll.

Eine weitere Möglichkeit, die Erfindung zu verwirklichen, besteht darin, dass beispielsweise mehrere relativ lange, schlauchartige mit Sand oder anderem Schüttgut prall gefüllte Behältnisse aus Abstandsgewirk an eine gefährdete Stelle eines Deiches gebracht und dort zopfförmig verlegt werden. Auch hierdurch kann eine Verfestigung des Deiches erreicht werden und dabei sichergestellt bleiben, dass das Material des Deiches und die Füllung der Schläuche an der vorgesehenen Stelle verbleiben.

Weitere Konfektionsmodelle können durch die flexiblen Eigenschaften der Abstandsgewirke den Erfordernissen situativ angepasst werden.

Denkbar ist auch ein sehr leichtes Material, das hygroskopisch ist und dadurch einerseits im trockenen Zustand den Antransport erleichtert und im verlegten Zustand Wasser aufnimmt und dadurch zur Deichstützung beiträgt.

Die Erfindung wird nachstehend anhand der Zeichnung beispielsweise erläutert.
- Figur 1: zeigt eine Querschnittsansicht durch eine Matte in Form eines Sandwichaufbaus eines Abstandsgewirkes.
- Figur2: zeigt eine Ausführungsform, bei welcher längliche Abstandsgewirksschläuche zopfförmig zusammengelegt worden sind.

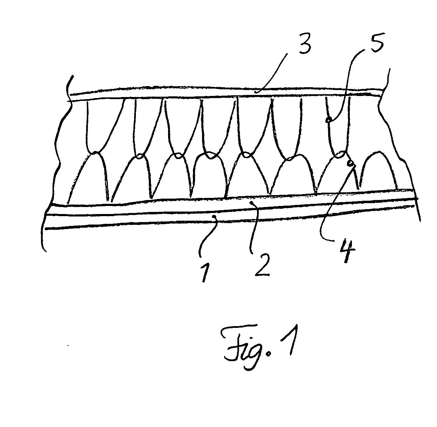

In der Figur 1 ist mit 1 die Kunststoffschicht an der Unterseite einer Matte, z.B. eine Polychloroprenschicht, bezeichnet. Nach oben hin ist das Abstandsgewirk zu erkennen. 2 ist die Warenunterseite und 3 die Warenoberseite mit den dazwischen verlaufenden Polfäden 4 und 5. Im Abstandsgewirk und oberhalb der Polychloroprenschicht 1 befindet sich das Füllmaterial.

Die in Figur 1 gezeigte Matte kann an einem Deich auf dessen Wasser abgewandten Seite befestigt werden, und zwar mit Hilfe von Heringen oder Pflöcken. Der verbleibende Teil der Matte erstreckt sich dann von oben her nach unten am Deich. Überschießendes Wasser kann nicht durch die Matte hindurch dringen und den darunterliegenden Bereich des Deiches zerstören.

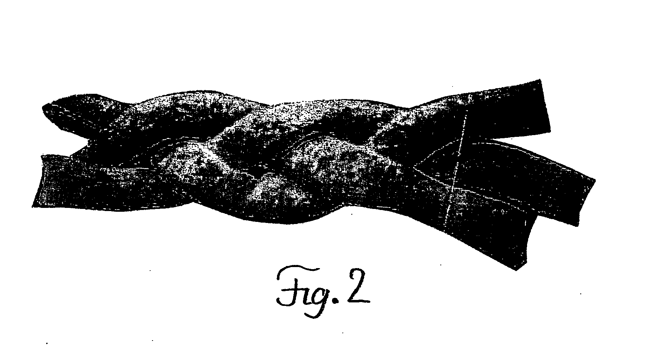

In der Figur 2 sind drei Hohlkörper als längliche Abstandsgewirke in Schlauchform, die eine innere Füllung besitzen. Damit derartige Schläuche an dem vorgesehenen Ort an einem Deich verbleiben, sind sie zopfartig zusammengelegt worden.

## Patentansprüche

1. Mit Füllmaterialpartikeln befüllbare Hohlkörper in Form von Matten oder Schläuchen aus Textilien als Befestigungsmaterial für durch Hochwasser gefährdete Deiche und Dämme, **dadurch gekennzeichnet, dass** die Hohlkörper aus Abstandsgewirken aus Kunststofffäden gebildet sind, die Abstandsgewirke an ihrer Warenunterseite (2) mit einer wasserundurchlässigen Kunststoffschicht (1) versehen sind und an ihrer Warenoberseite (3) Maschenweiten aufweisen, die kleiner als die Partikelgröße des Füllmaterials sind, wobei die Warenober- und die Warenunterseite den Hohlkörper begrenzen.
